Europäisches Patentamt

European Patent Office

Office européen des brevets

(19)

(11) Numéro de publication: **0 241 345**
**B1**

(12) **FASCICULE DE BREVET EUROPEEN**

(45) Date de publication du fascicule du brevet:
05.09.90

(51) Int. Cl.⁵: **G21C 1/08**

(21) Numéro de dépôt: 87400653.9

(22) Date de dépôt: 24.03.87

(54) Réacteur nucléaire à guidage d'écoulement dans les équipements internes supérieurs.

(30) Priorité: 01.04.86 FR 8604594

(43) Date de publication de la demande:
14.10.87 Bulletin 87/42

(45) Mention de la délivrance du brevet:
05.09.90 Bulletin 90/36

(84) Etats contractants désignés:
AT BE CH DE ES GB IT LI NL

(56) Documents cités:
EP-A- 0 125 063
EP-A- 0 125 325
US-A- 3 366 546

(73) Titulaire: FRAMATOME, Tour Fiat 1, Place de la Coupole,
F-92400 Courbevoie(FR)

(72) Inventeur: Baujat, Jacques, 31, avenue de Villeneuve
l'Etang, F-78000 Versailles(FR)
Inventeur: Desfontaines, Guy, 18, rue Jean Jaurès,
F-92800 Puteaux(FR)
Inventeur: Heuze, Alain, 39, rue d'Amsterdam,
F-75008 Paris(FR)

(74) Mandataire: Fort, Jacques et al, CABINET
PLASSERAUD 84, rue d'Amsterdam, F-75009 Paris(FR)

ACTORUM AG

## Description

L'invention concerne les réacteurs nucléaires à liquide réfrigérant sous pression, du type comprenant une cuve de résistance à la pression munie de tubulures d'entrée et de sortie situées sensiblement au même niveau, au-dessus du coeur, et des équipements internes ayant une enveloppe supportant le coeur et délimitant avec la cuve un trajet descendant de réfrigérant des tubulures d'entrée vers un espace situé sous le coeur, et des internes supérieurs délimitant un trajet d'écoulement du réfrigérant sortant du coeur, au-dessus de ce dernier, vers les tubulures de sortie.

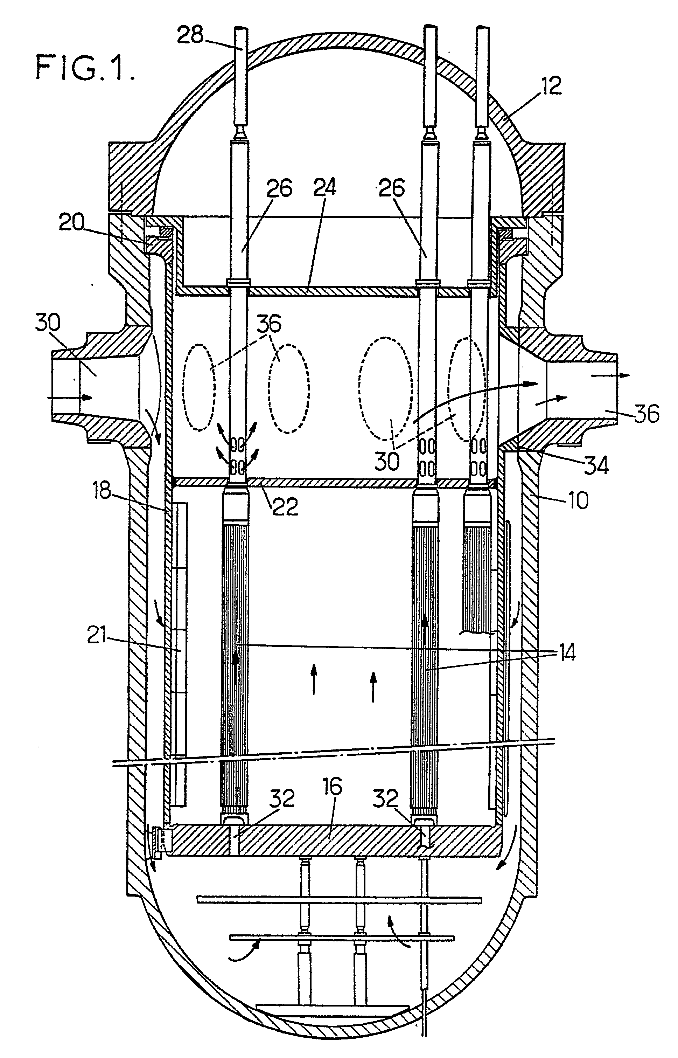

La Figure 1 montre, de façon simplifiée, une constitution interne, largement utilisée à l'heure actuelle, d'un réacteur du type ci-dessus défini, à eau sous pression. Le réacteur comprend une cuve 10 fermée par un couvercle 12 pour délimiter une capacité sous pression contenant le coeur du réacteur. Ce coeur est constitué d'assemblages combustibles 14, dont deux sont schématiquement représentés, disposés verticalement et côte-à-côte. Le coeur du réacteur est posé dans des équipements internes inférieurs, constitués par une structure en forme de panier. Ces équipements internes inférieurs sont constitués par un fond 16, également appelé "plaque support de coeur", une enveloppe cylindrique 18 et une bride 20 d'appui sur un épaulement interne de la cuve. Un cloisonnement 21 est interposé entre la périphérie, à section polygonale, du coeur et l'enveloppe 18. Le coeur est surmonté par les équipements internes supérieurs qui comprennent une plaque supérieure de coeur 22, située juste au-dessus du coeur, et destinée à assurer le centrage et le maintien des assemblages combustibles 14.

Les équipements internes supérieurs comprennent encore une plaque support 24 reliée à la plaque inférieure par des guides de grappes de commande 26 dans le mode de réalisation illustré en Figure 1. Dans d'autres cas, les plaques 22 et 24 sont reliées l'une à l'autre par des entretoises. La plaque support 24 est fixée à la cuve, par exemple par pincement de cette plaque 24 et de la bride 20, entre la cuve 10 et le couvercle 12.

Les guides de grappes 26 sont situés au-dessus d'assemblages combustibles 14 équipés de grappes de commande (non représentées) déplaçables verticalement par une tige qui traverse le couvercle à travers un fourreau de pénétration 28.

Les équipements internes inférieurs canalisent l'eau sous pression qui arrive dans la cuve par des tubulures d'entrée 30 et la forcent à descendre dans l'espace annulaire compris entre la cuve 10 et l'enveloppe 18. L'eau sous pression arrive ainsi à l'espace situé au-dessous du fond 16. Elle pénètre dans les assemblages combustibles 14 du coeur par des ouvertures 32 du fond, remonte dans le coeur à l'intérieur du cloisonnement 21 et traverse la plaque supérieure de coeur 22 pour pénétrer dans les équipements internes supérieurs. Les guides de grappes 26 protègent les grappes de commande, lorsqu'elles sont relevées, contre les sollicitations induites par l'écoulement d'eau qui sort du coeur. Cet écoulement, initialement vertical ascendant, est dévié dans les équipements internes supérieurs et sort de l'enveloppe 18 par des ajutages de sortie 34 placés en coïncidence avec des tubulures de sortie 36 portées par la cuve. Les ajutages de sortie 34 sont ajustés sur les tubulures 36 de façon qu'à froid subsiste un jeu permettant d'introduire ou de retirer les équipements internes inférieurs dans la cuve. Mais la dilatation différentielle entre la cuve 10 en acier au carbone et l'enveloppe 18 en acier inoxydable ferme le jeu et réduit le débit de contournement du coeur à une valeur très faible lorsque le réacteur est à sa température de fonctionnement.

Les efforts de soulèvement exercés sur les assemblages par l'écoulement ascendant d'eau sous pression dans le coeur sont repris par la plaque supérieure de coeur 22 qui les transmet à la plaque support 24, en appui sur le couvercle 12.

La disposition qui vient d'être décrite est bien connue et largement utilisée. Elle présente l'inconvénient que les guides de grappes 26, et surtout ceux qui sont à proximité des ajutages de sortie 34, sont soumis, sur la quasi-totalité de leur longueur, à un écoulement d'eau sous pression dévié transversalement et donc à des efforts importants. L'écoulement transversal risque d'exciter des mouvements vibratoires de ces guides de grappes. Et la circulation transversale à travers le réseau des guides s'accompagne de pertes de charge importantes.

La gravité des inconvénients ci-dessus est accrue lorsqu'on utilise un grand nombre de grappes, donc de guides 26 et lorsqu'on diminue le pas de répartition des assemblages combustibles. Or, la recherche d'une meilleure utilisation de la matière fissile conduit à ajouter, aux grappes de pilotage, des grappes ayant d'autres fonctions, par exemple de variation du spectre d'énergie des neutrons. La substitution envisagée, aux assemblages actuels de forme carrée, d'assemblages répartis suivant un pas triangulaire, comportant un réseau plus serré de crayons de combustible, est susceptible d'augmenter encore le nombre de guides de grappes nécessaires.

Diverses solutions peuvent être envisagées pour atténuer les inconvénients ci-dessus, suivant plusieurs approches différentes. Suivant une approche conforme au préambule de la revendication 1, on dispose, entre l'enveloppe de coeur 18 et l'ensemble des guides de grappes, une virole percée de trous. L'écoulement d'eau vers l'espace annulaire entre la virole et l'enveloppe munie des ajutages se répartit alors entre l'ensemble des trous et on diminue les vitesses maximales dans le réseau des guides. Cette solution (EP-A-125 325) oblige à augmenter le diamètre de la cuve et, en cas de rupture du circuit primaire, la perte de charge que subit l'écoulement au passage de l'étranglement représenté par les trous de la virole contrarie l'équilibrage de pression et augmente les sollicitations mécaniques.

Une autre approche consiste à rendre vertical l'écoulement dans la zone occupée par les guides de grappes. Diverses modifications de la disposition de la Figure 1 permettent d'arriver à ce résultat. Une première solution consiste à placer, autour de l'ensemble des guides de grappes, une virole qui n'est percée de trous qu'à sa partie supérieure. Mais, comme la précédente, cette disposition exige d'augmenter le diamètre de la cuve.

Une autre solution encore consiste à placer les tubulures de sortie de la cuve au-dessus des tubulures d'entrée et à placer, entre les deux jeux de tubulures, un anneau cylindrique reliant l'enveloppe à la cuve. Les tubulures de sortie peuvent alors être au-dessus du niveau des guides de sorte que la déviation d'écoulement n'intervient qu'au-dessus de ces dernières. Cette disposition exige d'allonger la cuve du réacteur. De plus, elle rend plus difficile de renoyer le coeur en cas de rupture de la branche chaude du circuit primaire (branche raccordée à la tubulure de sortie) par une injection d'eau arrivant par la tubulure d'entrée, du fait de la perte de hauteur motrice.

L'invention vise à fournir un réacteur nucléaire du type ci-dessus défini dans lequel la composante radiale de l'écoulement dans la zone occupée par les guides de grappes est notablement réduite, en particulier dans la partie basse des guides, sans pour autant qu'il soit nécessaire d'augmenter le diamètre ou la longueur de la cuve et tout en conservant des tubulures d'entrée et de sortie au même niveau.

Dans ce but, l'invention propose un réacteur caractérisé en ce que les équipements internes supérieurs comportent des cloisons fractionnant, dans le sens circonférentiel, l'espace annulaire compris entre l'enveloppe et la cuve au niveau commun des tubulures pour délimiter, des volumes alternés occupant chacun un secteur angulaire déterminé autour de l'axe vertical du réacteur et dont les uns appartiennent à la partie initiale du trajet descendant de réfrigérant et les autres obligent une partie au moins du réfrigérant sortant du coeur à suivre un trajet axial ascendant avant de s'incurver radialement vers les tubulures de sortie.

Dans un mode particulier de réalisation, les équipements internes supérieurs comportent des guides de grappes de commande placés au-dessus du coeur et recevant l'écoulement sortant des assemblages correspondants du coeur, lesdites cloisons guidant l'écoulement vers le haut jusqu'à des passages d'écoulement radial vers lesdits volumes alternés constituant un trajet radial et descendant de retour vers les tubulures de sortie.

Ces internes supérieurs peuvent notamment comprendre une plaque supérieure de coeur reliée par des guides à une plaque support fixée à la cuve et l'enveloppe et reliée à la cuve de façon sensiblement étanche, au-dessus du niveau des tubulures. Des cloisons présentant des tronçons circonférentiels situés à un niveau supérieur aux tubulures, des tronçons circonférentiels situés à un niveau inférieur et des tronçons de raccordement délimitent des volumes alternés communiquant les uns avec des tubulures de sortie, les autres avec des tubulures d'entrée, creux des volumes qui communiquent avec les tubulures de sortie étant également reliés à la partie supérieure de l'espace délimité par l'enveloppe.

L'invention sera mieux comprise à la lecture de la description qui suit de modes particuliers d'exécution de l'invention, donnés à titre d'exemples non limitatifs. La description se réfère aux dessins qui l'accompagnent, dans lesquels :

- la Figure 1, déjà mentionnée, est une vue en coupe suivant un plan vertical, montrant de façon simplifiée l'agencement interne d'un réacteur à eau légère sous pression de type connu ;
- la Figure 2, similaire à la Figure 1, montre un premier mode de réalisation de l'invention ;
- la Figure 2A est une vue de détail montrant, en vue développée, une fraction de la barrière de la Figure 2 munie de conduits additionnels ;
- les Figures 3 et 4, similaires à la partie haute de la Figure 2, montrent deux variantes de réalisation ;
- la Figure 5 est une vue en perspective, avec des arrachements, montrant une fraction des internes supérieurs de la Figure 4 ;
- la Figure 6, similaire aux Figures 3 et 4, montre une autre variante encore de réalisation.

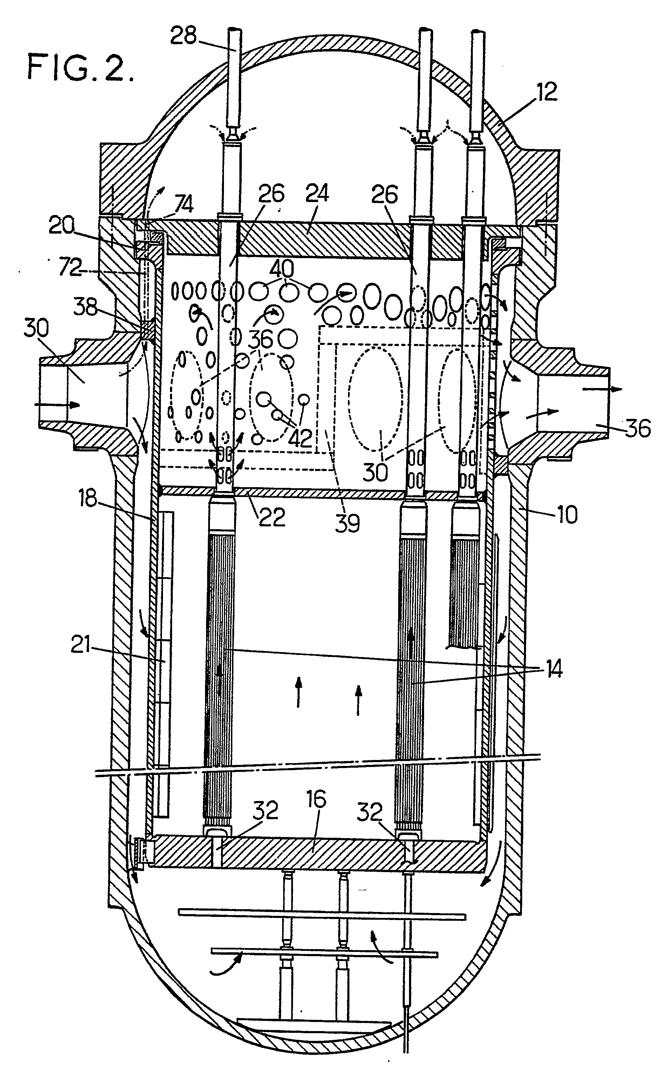

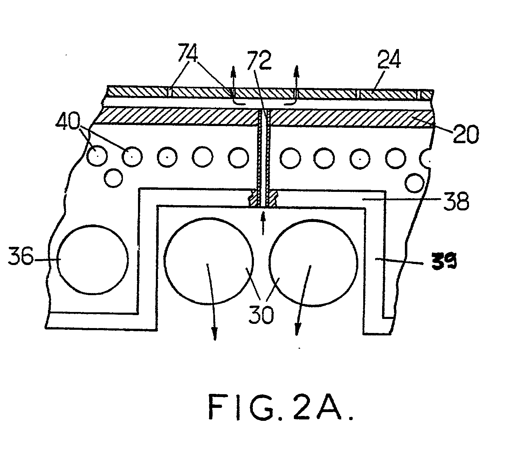

Le réacteur montré en Figure 2 a une constitution générale similaire à celle déjà montrée en Figure 1 et les organes correspondants sont désignés par le même numéro de référence sur les deux Figures. Mais le réacteur de la Figure 2 comporte des moyens délimitant, entre la cuve 10 et l'enveloppe de coeur 18, un espace annulaire qui est cloisonné de façon à amener l'eau qui arrive par les tubulures d'entrée 39 à descendre dans l'espace annulaire, et la majeure partie de l'eau qui sort du coeur à monter dans les équipements internes supérieurs, puis à descendre vers les tubulures de sortie 36.

Sur la Figure 2, les moyens de cloisonnement sont reportés sur une enveloppe 18 dont la constitution est la même que sur la Figure 1, si ce n'est qu'elle est dépourvue d'ajutages et percée d'un réseau d'ouvertures dont la disposition sera décrite plus loin. Mais l'enveloppe 18 porte des moyens de cloisonnement formés par une barrière 38 en créneaux. Cette barrière 38 est formée par des tronçons de profilé fixés de façon étanche sur l'enveloppe et usinés de façon telle que, à la température de fonctionnement du réacteur, la dilatation différentielle entre l'enveloppe 18 et la cuve 10 plaque la barrière 38 sur la surface interne de la cuve. Pour réduire encore le débit de contournement du coeur par le jeu éventuel entre la barrière et la paroi interne de la cuve, la barrière peut être munie de moyens classiques destinés à créer une perte de charge, tels que gorge de détente usinée sur la face externe de la barrière ou lèvre souple portée par la barrière et ayant un coefficient de dilatation plus élevé que celui de l'enveloppe 18. La barrière peut également être équipée de segments comportant des éléments droits ou de forme sur les parties verticales, et circulaires sur les parties horizontales.

La barrière 38 comporte des tronçons circonférentiels placés en quinconce les uns à un niveau légèrement supérieur à celui des tubulures 30 et 36, les autres à un niveau légèrement inférieur. Ces tronçons circonférentiels sont reliés par des tronçons longitudinaux 39 séparant chacun une tubulure d'entrée d'une tubulure de sortie et donnent à la barrière une forme en "créneau".

Dans la variante de réalisation montrée en Figure 2A, plusieurs tubes verticaux 72 traversent la barrière 38 et la bride 20. Ces tubes sont placés chacun au point haut entre deux tubulures d'entrée 30. Des trous verticaux 74 percés à la périphérie de la plaque support 24 complètent un trajet de circulation d'eau provenant des tubulures d'entrée 30 vers le ciel de cuve délimité par la plaque 24 et le couvercle 12. Grâce à cette communication, de l'eau à la température et à la pression d'entrée dans le réacteur est admise dans le ciel de cuve et y établit une pression supérieure à celle qui règne à la sortie du coeur du fait des pertes de charge dans ce dernier. En conséquence, des fuites peuvent se produire suivant le trajet indiqué en tirets sur la Figure 2 et maintenir le ciel de cuve à une température inférieure à la température de sortie du réacteur.

Dans l'enveloppe 18 sont ménagées des ouvertures de passage d'eau depuis les équipements internes supérieurs vers les tubulures 36. Certaines de ces ouvertures, 40, sont de grand diamètre et placées au-dessus du niveau des tronçons supérieurs de la barrière 38. D'autres, 42, sont de plus faible section de passage et situées au-dessous du niveau supérieur de la barrière 38, mais uniquement dans les secteurs angulaires de l'enveloppe qui débouchent au-dessus de la barrière. Dans les secteurs angulaires correspondant à l'emplacement des tubulures d'entrée, les ouvertures 40 peuvent avoir un diamètre particulièrement élevé pour compenser l'absence des ouvertures 42.

Les ouvertures 40 et 42 ont des dimensions et une répartition telles que la vitesse transversale de l'écoulement soit faible sur la plus grande partie de la hauteur des guides de grappes à partir du bas et ne soit élevée que dans la partie haute, là où les guides de grappes sont fermement maintenus par leur encastrement dans la plaque support 24. Une telle répartition des efforts hydrauliques sur les guides est favorable en ce sens qu'elle réduit les efforts transversaux sur le guidage dans la plaque 22 et le risque de vibrations. Sur la Figure 2, l'écoulement est représenté par des flèches en trait plein et l'on voit qu'il ne devient essentiellement transversal qu'en partie haute des guides 26.

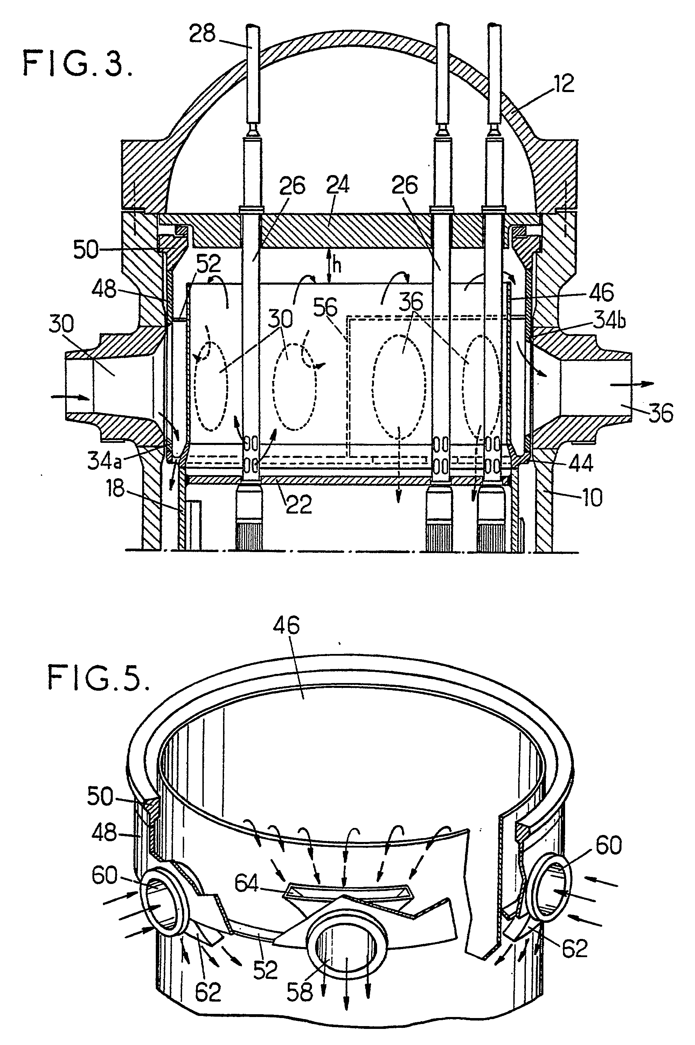

Dans la variante de réalisation montrée en Figure 3, une pièce d'adaptation 44 constituant moyen de cloisonnement est fixée sur l'enveloppe de coeur 18, à un niveau légèrement inférieur à celui des tubulures 30 et 36. Sur la pièce d'adaptation est soudé une première virole 46 destinée à assurer un écoulement axial le long des guides de grappes, sur la plus grande partie de la longueur de ces dernières à partir du bas. Une seconde virole, 48, concentrique à la première et l'entourant, est également soudée à la pièce d'adaptation 44. Cette seconde virole 48 est munie à sa partie supérieure d'une bride 50 de suspension de l'ensemble constitué par les viroles 48 et 46, la pièce d'adaptation 44, l'enveloppe 18 et le fond (non représenté) des internes inférieurs.

Les moyens de cloisonnement comportent, dans le cas illustré en Figure 3, des tronçons de tôle 52 et 56 soudés en créneaux sur les viroles 46 et 48.

La pièce d'adaptation annulaire 44 est percée d'ouvertures dans les secteurs angulaires correspondant à l'emplacement des tubulures d'entrée 30. Ces ouvertures permettent à l'eau arrivant par les tubulures 30 de descendre dans l'espace annulaire délimité par la cuve et l'enveloppe 18. La première virole 46 présente une longueur telle qu'elle laisse subsister un intervalle $h$ d'échappement radial d'eau entre elle et la plaque support 24.

La seconde virole, 48, comporte, de son côté, des ajutages d'entrée 34$\underline{a}$ et des ajutages de sortie 34$\underline{b}$ remplissant le même rôle que les ajutages 34 de la Figure 1.

On voit que, là encore, la circulation de réfrigérant, indiquée par des flèches, ne présente une composante transversale aux guides de grappes 26 qu'à la partie haute de ces derniers.

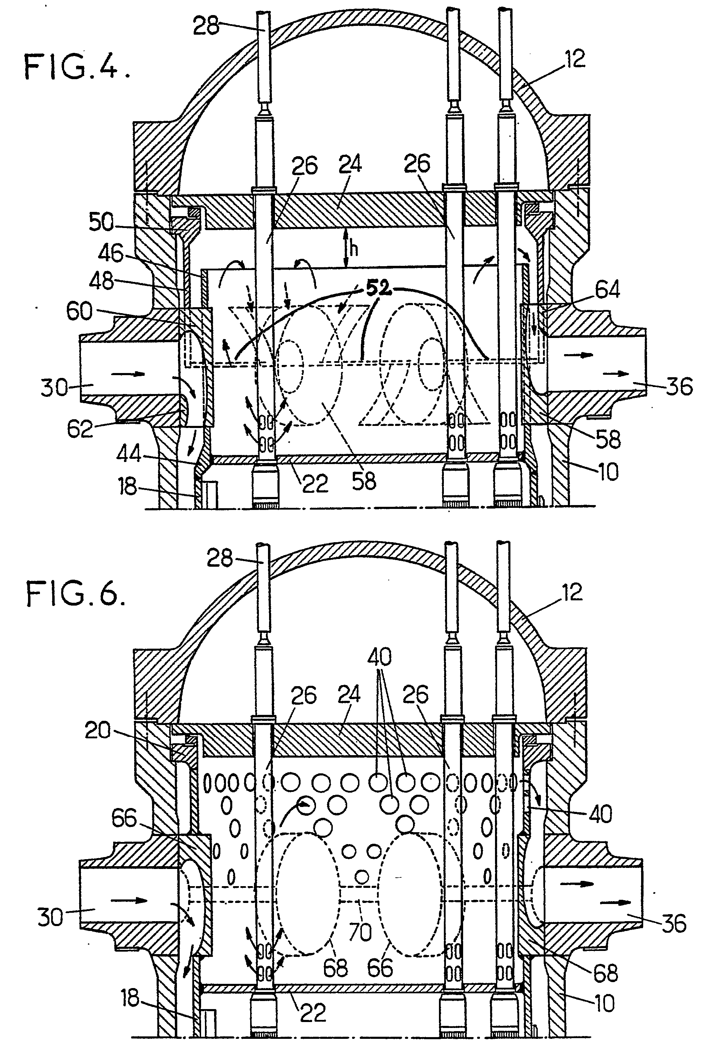

Dans la variante de réalisation montrée en Figures 4 et 5, où les organes déjà représentés sont désignés par le même numéro de référence, l'enveloppe de coeur 18 est encore munie d'une pièce d'adaptation 44 située légèrement au-dessous du niveau des tubulures 30 et 36. Cette pièce d'adaptation comporte une première virole 46 de diamètre légèrement inférieur à celui de l'enveloppe et de hauteur telle qu'elle laisse encore subsister un jeu $h$ d'échappement du réfrigérant. Une seconde virole 48, soudée à la première, est munie de la bride 50 de suspension.

Des guides d'eau 58 et 60 sont encastrés dans la virole 46 et soudés de façon étanche à cette dernière. Les guides 60 et 58 coïncident respectivement avec les tubulures d'entrée 30 et de sortie 38. Ils peuvent être constitués par des pièces creuses, réalisées par moulage, ayant une forme générale cylindrique munie d'une partie évasée formant entonnoir, et dirigée verticalement, c'est-à-dire perpendiculairement à l'axe de la partie cylindrique. La Figure 5 montre que les entonnoirs 62 associés aux guides 60 jouent un rôle de divergents. Les entonnoirs 64 associés aux guides 58 jouent au contraire le rôle de convergents. La surface des guides d'eau 58 et 60 qui est en regard des tubulures 36 et 30 est usinée et ajustée de façon à s'appuyer contre la partie de la cuve et à réduire le débit de contournement du coeur lorsque le réacteur est à sa température de fonctionnement normal.

Dans la variante de la Figure 6, les équipements internes ont une constitution générale similaire à celle montrée en Figure 1, si ce n'est que des guides d'eau 66 et 68 sont encastrés dans des ouvertures, à la partie supérieure de l'enveloppe 18, et solidarisés de l'enveloppe de façon étanche. Ces guides d'eau 66 et 68 sont respectivement en face des tubulures d'entrée 30 et de sortie 36 de la cuve. Elles sont reliées entre elles par des tronçons de ceinture 70. Les guides d'eau peuvent être constitués par des pièces forgées en forme d'écopes présentant une paroi tournée vers l'extérieur profilée de façon à guider l'eau qui pénètre par les tubulures d'entrée 30 vers le bas et l'eau qui sort des internes supérieurs vers les tubulures de sortie 36. Les tronçons de ceinture 70 seront généralement fixés par soudage sur l'enveloppe, l'étanchéité de la séparation entre l'eau qui entre dans le réacteur et celle qui sort étant assurée à chaud par la dilatation différentielle entre l'enveloppe 18 et la cuve 10.

Comme dans le cas de la Figure 2, l'enveloppe 18 est percée, à sa partie supérieure, de trous 40 de passage de l'eau provenant du coeur vers les volumes qui communiquent avec la tubulure de sortie 36.

L'invention est évidemment susceptible de nombreux autres modes de réalisation encore, portant notamment sur la forme des cloisons, qui peuvent être constitués de tronçons conformés ou non, ayant des orientations qui peuvent être autres que verticales et horizontales.

**Revendications**

1. Réacteur nucléaire à liquide réfrigérant sous pression comprenant une cuve de résistance à la pression munie de tubulures d'entrée et de sortie situées sensiblement au même niveau, au-dessus du coeur, et des équipements internes ayant une enveloppe (18) supportant le coeur et délimitant avec la cuve un trajet descendant de réfrigérant depuis les tubulures d'entrée (30) vers un espace situé sous le coeur, et des internes supérieurs délimitant un trajet d'écoulement du réfrigérant sortant du coeur, au-dessus de ce dernier, vers les tubulures de sortie (36), caractérisé en ce que les équipements internes supérieurs comportent des cloisons (38, 39; 52, 56; 58, 60; 66, 68, 70) fractionnant, dans le sens circonférentiel, l'espace annulaire compris entre l'enveloppe et la cuve, au niveau commun des tubulures, pour délimiter des volumes alternés occupant chacun un secteur angulaire déterminé autour de l'axe vertical du réacteur et dont les uns appartiennent à la partie initiale du trajet descendant de réfrigérant et les autres obligent une partie au moins du réfrigérant sortant du coeur à suivre un trajet axial ascendant avant de s'incurver radialement vers les tubulures de sortie (36).

2. Réacteur selon la revendication 1, caractérisé en ce que, les équipements internes supérieurs comportent des guides (26) de grappes de commande placés au-dessus du coeur et recevant l'écoulement sortant des assemblages correspondants du coeur, l'écoulement sortant des guides vers le haut travers des passages (40) d'écoulement radial vers ceux desdits volumes alternés qui constituent un trajet radial et descendant de retour vers les tubulures de sortie (36).

3. Réacteur nucléaire selon la revendication 1 ou 2, caractérisé en ce que les cloisons comprennent des tronçons circonférentiels situés à un niveau supérieur aux tubulures, des tronçons circonférentiels situés à un niveau inférieur aux tubulures et des tronçons de raccordement (39, 56), délimitant des volumes alternés communiquant les uns avec les tubulures de sortie, les autres avec les tubulures d'entrée, ceux des volumes qui communiquent avec les tubulures de sortie étant également reliés à la partie supérieure de l'espace délimité par l'enveloppe.

4. Réacteur selon la revendication 1 ou 2, caractérisé en ce que les cloisons comportent des guides du réfrigérant en forme d'écope (66, 68) portés par l'enveloppe, reliés par des tronçons de ceinture (70) dirigeant vers le bas le réfrigérant qui arrive par les tubulures d'entrée de la cuve et dirigeant vers les tubulures de sortie le réfrigérant qui sort de la partie supérieure de l'espace délimité par l'enveloppe.

5. Réacteur selon la revendication 4, caractérisé en ce que l'enveloppe est percée d'ouvertures (40, 42) situées au-dessus desdits tronçons, offrant une section de passage par unité de hauteur qui augmente du bas vers le haut.

6. Réacteur selon la revendication 5, caractérisé en ce que les ouvertures placées à la partie haute de l'enveloppe présentent une section plus grande que les ouvertures placées à la partie basse.

7. Réacteur selon la revendication 1 ou 2, caractérisé en ce que l'enveloppe comprend, à sa partie supérieure, une virole externe (48) destinée à s'appliquer de façon étanche autour des tubulures et percée d'ouvertures d'entrée et de sortie de liquide réfrigérant au droit des tubulures et une virole interne (46) délimitant, avec une plaque (24) support de guides de grappe, un espace de collection de réfrigérant, lesdites cloisons (52, 56) étant interposées entre les viroles.

8. Réacteur selon la revendication 1 ou 2, caractérisé en ce que l'enveloppe de coeur (18) comporte à sa partie haute une virole externe (48) de suspension destinée à s'appliquer de façon étanche autour des tubulures et percée d'ouvertures d'entrée et de sortie de liquide réfrigérant au droit des tubulures et une virole interne (46) délimitant, avec une plaque (24) support de guides de grappe, un espace de collection de réfrigérant, des guides de réfrigérant (58, 60) étant encastrés dans la virole interne et étant munis d'entonnoirs (64) de guidage du réfrigérant vers les tubulures de sortie (36) et de diffusion de réfrigérant à partir des tubulures d'entrée (30), lesdits guides de réfrigérant étant reliés à la partie basse de la virole externe et entre eux par des tronçons de ceinture (52).

9. Réacteur selon la revendication 2, caractérisé en ce que les internes supérieurs comportent une plaque (24) support de guides de grappe, à laquelle sont suspendus les guides de grappe (26), située au-dessus du niveau commun des tubulures et en ce que l'enveloppe ou bien est percée à sa partie supérieure d'ouvertures (40) si elle se raccorde de façon étanche à la plaque support (24), ou bien se termine à distance (h) de la plaque.

**Claims**

1. Pressurized liquid cooled nuclear reactor having a pressure resistant vessel provided with inlet and outlet pipes located approximately at the same level, above the core, and internal equipments having a barrel (18) supporting the core and cooperating with the vessel to define a downward path of coolant from the inlet pipes (30) to a space located under the core and having upper internals which define a flow path for the coolant leaving the core, above the latter, toward the outlet pipes (36), characterized in that the upper internal equipments comprise dividing walls (38, 39 ; 52, 56 ; 58, 60 ; 66, 68, 70) fractionating, in the circumferential direction, the annular space comprised between the barrel and the vessel, at the common level of the pipes, for defining alternating volumes which each occupy a predetermined angular sector about the vertical axis of the reactor, some of the volumes belonging to the initial part of the downward path of the flow while the other volumes force part at least of the coolant flowing out of the core to follow an upward axial path before it bends radially toward the outlet pipes (36).

2. Reactor according to claim 1, characterized in that, said upper internal equipments including control cluster guides (26) located above the core and receiving the flow leaving corresponding assemblies of the core, the flow which leaves the guides upwardly traverses passages (40) for radial flow to those of said alternating volumes which constitute a radial downward return path toward the outlet pipes (36).

3. Nuclear reactor according to claim 1 or 2, characterized in that the dividing walls include circumferential sections situated at a higher level than the pipes, circumferential sections situated at a level lower than the pipes and connecting sections (39, 56) defining alternating volumes, some of them communicating with the outlet pipes while the others communicate with the inlet pipe, those of the volumes which communicate with the outlet pipes being also connected to the upper part of the space defined by the barrel.

4. Nuclear reactor according to claim 1 or 2, characterized in that the dividing walls include scoop-shaped coolant guides (66, 68) carried by the barrel, connected by girdle sections (70) directing the coolant flow which arrives through the inlet pipes of the vessel downwards and directing the coolant flow which leaves the upper part of the space defined by the barrel towards the outlet pipes.

5. Reactor according to claim 4, characterized in that the barrel is formed with openings (40, 42) situated above said sections, offering a flow cross-sectional area per unit height which increases from the bottom to the top.

6. Nuclear reactor according to claim 5, characterized in that the openings at the top part of the casing have a larger cross-sectional flow area than the openings placed in the lower part thereof.

7. Reactor according to claim 1 or 2, characterized in that the barrel comprises, at its upper part, an external shroud (48) arranged for sealing contact around the pipes and formed with coolant inlet and outlet openings aligned with the pipes and an internal shroud (46) defining, with a cluster guide support plate (24), a coolant collection space, said dividing walls (52, 56) being interposed between the shrouds.

8. Reactor according to claim 1 or 2, characterized in that the core barrel (18) has, at its upper part, a suspension internal shroud (48) arranged for sealing contact around the pipes and formed with coolant inlet and outlet openings aligned with the pipes and an internal shroud (46) which defines, with a cluster guide support plate (24), a coolant collection space, coolant guides (58, 60) projecting into the internal shroud and being provided with funnels (64) for guiding the coolant towards the outlet pipes (36) and for diffusing the coolant from the inlet pipes (30), said coolant guides being connected to the lower part of the external shroud and to each other by girdle sections (52).

9. Reactor according to claim 2, characterized in that the upper internals include a cluster guide support plate (24) from which the cluster guides (26) are suspended, and which is situated above the common level of the pipes and in that the barrel is formed at its upper part with openings (40) if it is sealingly connected to the support plate (24) or terminates at a distance (h) from the plate.

**Patentansprüche**

1. Kernreaktor mit unter Druck stehender Kühlflüssigkeit, mit einem Druckgefäß, das mit Ein- und Auslaßstutzen versehen ist, die oberhalb des Reaktorkernes ungefähr auf gleicher Höhe liegen, und inneren Einbauten, die einen Mantel (18) aufweisen, der den Reaktorkern trägt und mit dem Gefäß einen Abwärtsströmungsweg des Kühlmittels von den Einlaßstutzen (30) zu einem unterhalb des Reaktorkerns gelegenen Raum begrenzt, und mit oberen inneren Einbauten, die einen Abflußweg für das aus dem Reaktorkern austretende Kühlmittel oberhalb des Kernes zu den Auslaßstutzen (36) begrenzen, dadurch gekennzeichnet, daß die oberen inneren Einbauten Trennwände (38, 39; 52, 56; 58, 60; 66, 68, 70) aufweisen, die in Umfangsrichtung den zwischen dem Mantel und dem Gefäß enthaltenen Ringraum auf der gemeinsamen Höhe der Stutzen unterteilen, um abwechselnde, jeweils einen um die vertikale Achse des Reaktors definierten Winkelsektor einnehmende Bereiche zu begrenzen, von denen die einen zum Anfangsabschnitt des Kühlmittel-Abwärtsströmungsweges gehören und die anderen mindestens einen Teil des den Reaktorkern verlassenden Kühlmittels dazu zwingen, einem axialen Aufwärtsströmungsweg vor einem Umlenken in radialer Richtung zu den Auslaßstutzen (36) zu folgen.

2. Reaktor nach Anspruch 1, dadurch gekennzeichnet, daß die oberen inneren Einbauten Steuerstabbündelführungen (26) aufweisen, die oberhalb des Reaktorkernes angeordnet sind und die von den entsprechenden Brennelementbündeln des Reaktorkernes ausgehende Abflußströmung aufnehmen, wobei die die Führungen nach oben verlassende Abflußströmung radial zu den genannten abwechselnden Bereichen gerichtete Strömungsdurchlässe (40) durchsetzt, die einen radialen und abwärts gerichteten Rückströmungsweg zu den Auslaßstutzen (36) bilden.

3. Kernreaktor nach Anspruch 1 oder 2, dadurch gekennzeichnet, daß die Trennwände Umfangsabschnitte, die höher als die Stutzen liegen, Umfangsabschnitte, die tiefer als die Stutzen liegen, und Verbindungsabschnitte (39, 56) aufweisen, die abwechselnde Bereiche begrenzen, von denen die einen mit den Auslaßstutzen und die anderen mit den Einlaßstutzen in Verbindung stehen, wobei diejenigen der Bereiche, die mit den Auslaßstutzen in Verbindung stehen, auch mit dem oberen Teil des durch den Mantel begrenzten Raumes verbunden sind.

4. Reaktor nach Anspruch 1 oder 2, dadurch gekennzeichnet, daß die Trennwände schöpflöffelförmige, am Mantel abgestützte Wasserführungen (66, 68) aufweisen, die über Abschnitte von Umfangsgängen (70) verbunden sind und die das über die Einlaßstutzen des Gefäßes einströmende Wasser nach unten und das aus dem oberen Teil des durch den Mantel begrenzten Raumes abströmende Wasser zu den Auslaßstutzen leiten.

5. Reaktor nach Anspruch 4, dadurch gekennzeichnet, daß der Mantel von Öffnungen (40, 42) durchsetzt ist, die oberhalb der genannten Abschnitte liegen und einen Durchlaßquerschnitt pro Höheneinheit bieten, der von unten nach oben zunimmt.

6. Reaktor nach Anspruch 5, dadurch gekennzeichnet, daß die im oberen Teil des Mantels angeordneten Öffnungen einen größeren Querschnitt als die im unteren Teil angeordneten Öffnungen aufweisen.

7. Reaktor nach Anspruch 1 oder 2, dadurch gekennzeichnet, daß der Mantel in seinem oberen Teil einen äußeren Ring (48), der an die Stutzen abdichtend anlegbar und von Einlaß- und Auslaßöffnungen für die von und zu den Stutzen strömende Kühlflüssigkeit durchsetzt ist, und einen inneren Ring (46) aufweist, der mit einer Trägerplatte (24) für die Stabbündelführungen einen Kühlmittelauffangraum begrenzt, wobei die Trennwände (52, 56) zwischen den Ringen liegen.

8. Reaktor nach Anspruch 1 oder 2, dadurch gekennzeichnet, daß der Reaktorkernmantel (18) an seinem oberen Teil einen äußeren Aufhängungsring (48), der an die Stutzen abdichtend anlegbar und von Einlaß- und Auslaßöffnungen für die von und zu den Stutzen strömende Kühlflüssigkeit durchsetzt ist, und einen inneren Ring (46) aufweist, der mit einer Trägerplatte (24) für die Stabbündelführungen einen Kühlmittelauffangraum begrenzt, wobei Wasserführungen (58, 60) in den inneren Ring eingebaut und mit Trichtern (64) zur Führung des Wassers zu den Auslaßstutzen (36) und zur Verteilung des Wassers ausgehend von den Einlaßstutzen (30) versehen sind, wobei diese Wasserführungen mit dem unteren Teil des äußeren Ringes und untereinander über Abschnitte von Umfangsgängen (52) verbunden sind.

9. Reaktor nach Anspruch 2, dadurch gekennzeichnet, daß die oberen inneren Einbauten eine Trägerplatte (24) für die Stabbündelführungen aufweisen, an der die Stabbündelführungen (26) aufgehängt sind und die oberhalb der gemeinsamen Höhe der Stutzen liegt, und daß der Mantel in seinem oberen Teil von Öffnungen (40) durchsetzt ist, wenn er mit der Trägerplatte (24) abdichtend verbunden ist, oder in einem Abstand (h) von der Platte endet.

FIG.1.

FIG.2.

FIG. 2A.

FIG.3.

FIG.5.

FIG.4.

FIG.6.